Europäisches Patentamt

European Patent Office

Office européen des brevets

(11) Veröffentlichungsnummer: **0 446 800 A1**

(12) # EUROPÄISCHE PATENTANMELDUNG

(21) Anmeldenummer: **91103565.7**

(22) Anmeldetag: **08.03.91**

(51) Int. Cl.5: **B65D 77/20**, B65D 1/36, B65D 81/34

(30) Priorität: **15.03.90 DE 4008265**

(43) Veröffentlichungstag der Anmeldung:
**18.09.91 Patentblatt 91/38**

(84) Benannte Vertragsstaaten:
**AT BE CH DE FR LI NL**

(71) Anmelder: **Buchter, Reinhard**
**Heinestrasse 18**
**W-7535 Königsbach-Stein 1(DE)**

(72) Erfinder: **Buchter, Reinhard**
**Heinestrasse 18**
**W-7535 Königsbach-Stein 1(DE)**

(74) Vertreter: **Durm, Frank et al**
**Patentanwälte Durm & Durm**
**Felix-Mottl-Strasse 1a**
**W-7500 Karlsruhe 21(DE)**

(54) **Mehrweg-Verpackung aus Kunststoff für Fertiggerichte.**

(57) Eine sehr oft wiederverwendbare Mehrweg-Verpackung aus Kunststoff für Fertiggerichte bestehend aus einer Menüschale (1), einem abnehmbaren Deckel (2) und aufgeschobenen Klemmleisten (3). Die Oberseite (7) des Schalenrandes (6) sowie die Unterseite (12) des Deckelrandes (11) sind jeweils eben ausgebildet. Der Deckelrand (11) trägt eine ringsum laufende flache Dichtung, die aus dauerelastischem Kunststoff besteht und aufvulkanisiert ist. Die Klemmleisten 3 weisen hufeisenförmigen Querschnitt auf und umfassen den Schalenrand (6) und den Deckelrand (11).

Die vorgeschlagene Mehrweg-Verpackung stellt eine umweltbewußte Alternative zu den üblicherweise zur Verpackung von Fertiggerichten benutzten Behältern aus Aluminiumfolie dar.

Fig. 1

EP 0 446 800 A1

Die Erfindung betrifft eine Mehrweg-Verpakkung aus Kunststoff für Fertiggerichte, welche eine rechteckige Menüschale, die ringsum einen flachen vorstehenden Schalenrand aufweist, sowie einen abnehmbaren Deckel umfaßt.

Mit einem Deckel verschließbare Menüschalen werden in Großküchen eingesetzt. Sie dienen als Verpackung von frisch gekochten Gerichten und, nach Abnehmen des Deckels, gleichzeitig als Eßgeschirr. Gegebenenfalls können die verpackten Speisen im Anschluß an den Transport von der Großküche zum Konsumenten unmittelbar vor dem Verzehr nochmals aufgewärmt werden.

Es ist derzeit üblich, Fertiggerichte in nach Gebrauch wegzuwerfenden Einweg-Verpackungen auszugeben. Beispielsweise beschreibt das Deutsche Gebrauchsmuster 79 07 455 eine rechteckige Menüschale für Fertiggerichte, die durch Tiefziehen aus Aluminiumfolie hergestellt ist. Nach Einfüllen des Fertiggerichts wird dieser Behälter mit einem aus gleichem Werkstoff bestehenden Deckel versehen.

Die Verwendung von Einweg-Verpackungen aus Aluminium ist nicht nur teuer, sondern bringt auch erhebliche Probleme mit sich. Denn nach dem Essen wird die leere Menüschale samt Deckel einfach weggeworfen. Bei den in der Bundesrepublik Deutschland täglich etwa 2,5 Millionen ausgegebenen Fertiggerichten bedeutet dies einen Verbrauch von über 60 Tonnen Aluminium, die unter hohem Energieeinsatz hergestellt werden müssen. Da aus organisatorischen Gründen eine getrennte Sammlung verbrauchter Einweg-Verpackungen nur in Ausnahmefällen möglich ist, werden nicht nur wertvolle Rohstoffe vergeudet, sondern auch die Müllentsorgung ganz erheblich belastet.

Eine andere, ebenfalls nur einmal zu verwendende Lebensmittelverpackung bzw. Menüschale ist mit dem Deutschen Gebrauchsmuster 87 04 646 bekannt geworden. Das aus Karton, Aluminium oder Kunststoff gefertigte Behältnis hat die Form eines Tellers und wird mit einem vom Blatt zu verarbeitenden Kartondeckel verschlossen.

Aufgabe der vorliegenden Erfindung ist es, eine stabile und leicht handhabbare Mehrweg-Verpackung für Fertiggerichte zu schaffen, die ohne Probleme vielmals wiederverwendet werden kann.

Bei der Lösung dieser Aufgabe wird ausgegangen von einer Mehrweg-Verpackung aus Kunststoff, wie sie beispielsweise mit dem Deutschen Gebrauchsmuster 87 06 625 bekannt geworden ist. Der dort beschriebene Speisen-Portionsteller mit Deckel besteht aus einem rechteckigen Unterteil für die Speisen, welcher ringsum einen vorstehenden Schalenrand aufweist, sowie einem abnehmbaren Deckel, der mittels federnder Laschen auf dem Unterteil befestigt werden kann.

Gelöst wird die Aufgabe dadurch, daß die Oberseite des flachen vorstehenden Schalenrandes der rechteckigen Menüschale eben ausgebildet ist und parallel zu deren Boden verläuft, daß der abnehmbare Deckel einen umlaufenden flachen Deckelrand aufweist, dessen Unterseite ebenfalls eben ausgebildet ist und auf dem Schalenrand flach aufliegt, daß der Deckelrand an seiner Unterseite eine ringsum laufende flache Dichtung trägt, und daß der Schalenrand und der Deckelrand von aufgeschobenen elastischen Klemmleisten gemeinsam umfaßt und aufeinandergepreßt werden.

Die ebene Ausbildung der Oberseite des Schalenrandes und der Unterseite des Deckelrandes gewährleistet, in Verbindung mit der am Deckelrand vorgesehenen Dichtung, ein absolut sicheres Schließen nach Einfüllen der Speisen. Der erforderliche Anpreßdruck zwischen Schalenrand und Deckelrand wird durch die aufgeschobenen elastischen Klemmleisten erzeugt. Da diese Klemmleisten in aufgeschobenem Zustand den Schalenrand und den Deckelrand umfassen, weist die gefüllte und dicht verschlossene Mehrweg-Verpackung gemäß der Erfindung keinerlei vorstehende Verschlußelemente auf, die beim Transport hinderlich sein könnten. Zum Öffnen werden einfach die Klemmleisten von den Rändern abgezogen, wozu es keinerlei Werkzeugs bedarf. Die vorgeschlagene Mehrweg-Verpackung ist einfach geformt und stabil, so daß sie problemlos in Großküchen handhabbar ist und bei einigermaßen sorgfältiger Behandlung bis zu zweitausendmal benutzt werden kann.

Bei einer bevorzugten Ausführung der erfindungsgemäßen Mehrweg-Verpackung sind die Unterseite des Schalenrandes und die Oberseite des Deckelrandes nach innen zur Mitte der Menüschale bzw. des Deckels hin geneigt, und weisen die Klemmleisten hufeisenförmigen Querschnitt auf. Durch diese Ausformung ergibt sich eine selbsttätige Verriegelung der aufgeschobenen Klemmleisten unter Ausnutzung deren Elastizität. Vorteilhaft tragen die Klemmleisten an ihren beiden gegenüberliegenden Längskanten jeweils nach außen abgewinkelte Stege, so daß sie über die verdickten Ränder des Deckels bzw. der Menüschale gut hinweggleiten.

Zum dichten Verschließen der Mehrweg-Verpakkung ist es ausreichend, wenn wenigstens zwei Klemmleisten entlang zweier gegenüberliegender Abschnitte des Schalenrandes bzw. Deckelrandes vorgesehen sind. Sofern die Menüschale nicht quadratisch, sondern länglich ausgebildet ist, empfiehlt es sich, die Klemmleisten entlang den beiden gegenüberliegenden längeren Kanten vorzusehen. Bei erhöhten Anforderungen hinsichtlich der Dichtigkeit, beispielsweise für den Transport von heißen flüssigen Speisen, können zusätzlich auch entlang den beiden anderen Längskanten - dann also insgesamt vier - Klemmleisten vorgesehen werden.

Besonders bevorzugt wird eine Ausführung, bei der die Klemmleisten einstückig aus federelastischem Edelstahl geformt sind. Edelstahl ist rostfrei und kann deshalb problemlos zusammen mit den anderen Teilen der Mehrweg-Verpackung, also Menüschale und Deckel, gespült werden.

Eine ebene Ausbildung des Deckels führt zu einer guten Stapelbarkeit der vorgeschlagenen Mehrweg-Verpackung und somit zur Verringerung von Transportvolumen.

Zweckmäßig trägt der Deckel an seiner Außenseite eine parallel und im Abstand zum Deckelrand umlaufende Anschlagleiste. Diese Leiste dient einmal als Anschlag für die aufgeschobenen Klemmleisten, hat aber auch die Funktion, ein Verrutschen übereinander gestapelter Mehrweg-Verpackungen zu verhindern.

In vorteilhafter Weiterbildung der Erfindung weist der Deckel an seiner Innenseite eine parallel und im Abstand zum Deckelrand umlaufende Registrierleiste auf, welche in die Menüschale von oben hineinragt und an deren Seitenwänden innen anliegt. Diese zusätzliche Registrierleiste läßt beim Verschließen den Deckel beinahe automatisch in seine vorgesehene Lage gleiten und dient nebenbei als zusätzliche Dichtung.

Sehr bevorzugt wird ferner eine Ausführung, bei der der Deckel einstückig aus einem thermoplastischen Kunststoff geformt ist, und bei der die umlaufende Dichtung aus dauerelastischem Kunststoff besteht, der auf die Unterseite des Deckelrandes aufvulkanisiert ist. Bei einem derart ausgebildeten Deckel läßt sich die Dichtung extrem flach ausbilden. Ein weiterer Vorteil gegenüber einer herkömmlichen eingesetzten Dichtung besteht darin, daß diese untrennbar mit dem Deckel verbunden ist und auch bei hoher mechanischer Beanspruchung der Mehrweg-Verpackung nicht verloren gehen kann.

Ein Ausführungsbeispiel der Erfindung wird nachstehend anhand der beigefügten Zeichnungen näher erläutert. Es zeigen:

Figur 1     eine aus Menüschale, Deckel und Klemmleisten bestehende, hier noch geöffnete Mehrweg-Verpackung, in perspektivischer Darstellung;

Figur 2a     die Mehrweg-Verpackung von Figur 1 kurz vor dem Verschließen, in einem vergrößerten Vertikalschnitt entlang der Linie II;

Figur 2b     die Mehrweg-Verpackung gemäß Figur 2a in vollständig geschlossenem Zustand.

Die dargestellte Mehrweg-Verpackung besteht aus einer Menüschale 1, einem Deckel 2 und zwei Klemmleisten 3, von denen hier nur eine, nämlich die hintere dargestellt ist.

Die Menüschale 1 ist rechteckig ausgebildet und hat einen ebenen Boden 4, leicht schräg nach außen geneigte Seitenwände 5 und einen Schalenrand 6. Die Oberseite 7 des Schalenrandes 6 ist eben ausgebildet, während seine Unterseite 8 nach innen zur Mitte der Menüschale 1 hin leicht geneigt ist. Das Innere der Menüschale 1 ist durch Speisen-Trennstege 9 in drei Einzelfächer unterteilt. Am Rand des Bodens 4 sind Füße 10 angeformt.

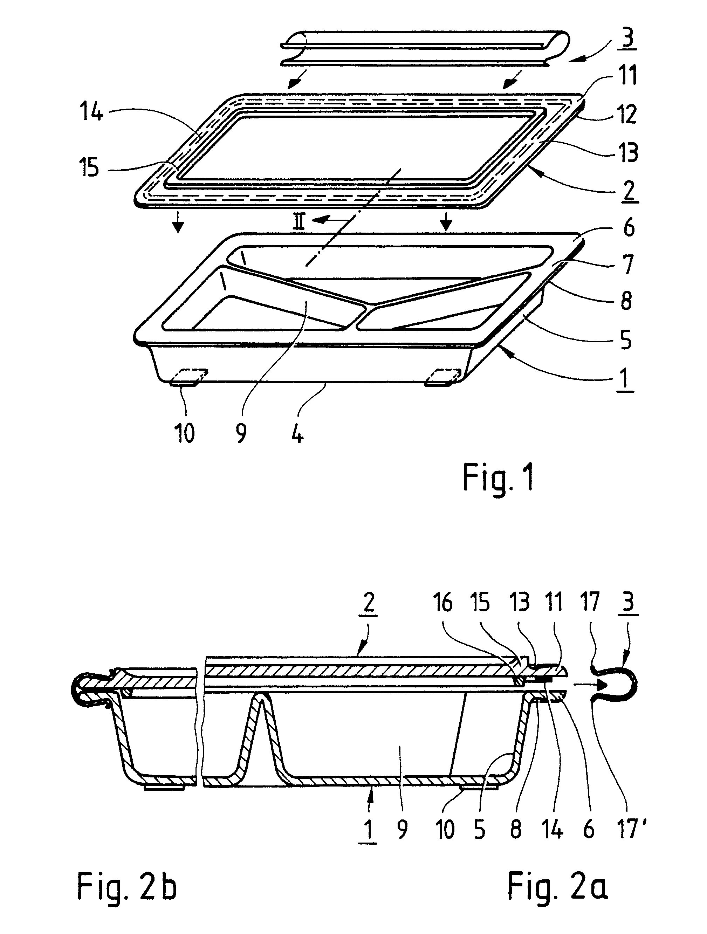

Der abnehmbare Deckel 2 weist einen umlaufenden flachen Deckelrand 11 auf, dessen Unterseite 12 eben ausgebildet ist und auf dem Schalenrand 6 flach aufliegt. Die Oberseite 13 des Deckelrands 11 ist nach innen zur Mitte des Deckels 2 hin leicht geneigt. An seiner Unterseite 12 trägt der Deckelrand 11 eine ringsum laufende flache Dichtung 14 (vergleiche Figur 2a), die aus dauerelastischem Kunststoff besteht und aufvulkanisiert ist. Außen trägt der Deckel 2 eine parallel und im Abstand zu seinem Deckelrand 11 umlaufende Anschlagleiste 15. An seiner Innenseite ist eine ebenfalls parallel und im Abstand zum Deckelrand 11 umlaufende Registrierleiste 15 vorgesehen, welche von oben in die Menüschale 1 hineinragt und an deren Seitenwänden 5 innen anliegt.

Die Klemmleisten 3 sind einstückig aus federelastischem Edelstahl geformt und weisen hufeisenförmigen Querschnitt auf. An ihren beiden gegenüberliegenden Längskanten tragen die Klemmleisten 3 jeweils nach außen abgewinkelte Stege 17 bzw. 17'. In aufgeschobenem Zustand, wie er in Figur 2b dargestellt ist, umfassen die Klemmleisten 3 den Schalenrand 6 und den Deckelrand 11 vollständig, wobei das freie Ende des oberen Stegs 17 an der Anschlagleiste 15 des Deckels 2 anschlägt. Unter der Federwirkung der in aufgeschobenem Zustand leicht gespreizten Klemmleisten 3 werden Schalenrand 6 und Deckelrand 11 flach aufeinander gepreßt, wobei die Dichtung 14 wirksam wird und verhindert, daß Speisenpartikel aus der verschlossenen Mehrweg-Verpackung nach außen dringen.

Zum Öffnen der geschlossenen Mehrweg-Verpackung werden, wie am besten aus Figur 2a ersichtlich, zunächst die Klemmleisten 3 vom Schalenrand 6 und Deckelrand 11 abgezogen und anschließend der Deckel 2 angehoben. Das Entfernen der Klemmleisten 3 geschieht entweder, wie in Figur 2a mit einem Pfeil angedeutet, durch Abziehen nach außen unter Überwindung der Federkraft, oder durch Parallelverschiebung entlang den Außenkanten der Menüschale 1 bzw. des Deckels 2.

Verzeichnis der Bezugsziffern

1      Menüschale
2      Deckel

| | |
|---|---|
| 3 | Klemmleiste |
| 4 | Boden (von 1) |
| 5 | Seitenwand |
| 6 | Schalenrand (von 1) |
| 7 | Oberseite (von 6) |
| 8 | Unterseite (von 6) |
| 9 | Speisen-Trennsteg |
| 10 | Fuß |
| 11 | Deckelrand (von 2) |
| 12 | Unterseite (von 11) |
| 13 | Oberseite (von 11) |
| 14 | Dichtung |
| 15 | Anschlagleiste (auf 2) |
| 16 | Registrierleiste (an 2) |
| 17 | Steg (an 3) |
| 17' | Steg (an 3) |

## Patentansprüche

1. Mehrweg-Verpackung aus Kunststoff für Fertiggerichte, umfassend
   - eine rechteckige Menüschale (1), die ringsum einen flachen vorstehenden Schalenrand (6) aufweist;
   - einen abnehmbaren Deckel (2); dadurch **gekennzeichnet, daß**
   - die Oberseite (7) des Schalenrandes (6) eben ausgebildet ist und parallel zum Boden (4) der Menüschale (1) verläuft;
   - der Deckel (2) einen umlaufenden flachen Deckelrand (11) aufweist, dessen Unterseite (12) eben ausgebildet ist und auf dem Schalenrand (6) flach aufliegt;
   - der Deckelrand (11) an seiner Unterseite (12) eine ringsum laufende flache Dichtung (14) trägt;
   - der Schalenrand (6) und der Deckelrand (11) von aufgeschobenen elastischen Klemmleisten (3) gemeinsam umfaßt und aufeinandergepreßt werden.

2. Mehrweg-Verpackung nach Anspruch 1, dadurch **gekennzeichnet, daß**
   - die Unterseite (8) des Schalenrandes (6) und die Oberseite (7) des Deckelrandes (11) nach innen zur Mitte der Menüschale (1) bzw. des Deckels (2) hin geneigt sind;
   - die Klemmleisten (3) hufeisenförmigen Querschnitt aufweisen.

3. Mehrweg-Verpackung nach Anspruch 2, dadurch **gekennzeichnet, daß** die Klemmleisten (3) an ihren beiden gegenüberliegenden Längskanten jeweils nach außen abgewinkelte Stege (17, 17') tragen.

4. Mehrweg-Verpackung nach einem der Ansprüche 1 bis 3, dadurch **gekennzeichnet, daß** wenigstens zwei Klemmleisten (3) entlang zweier gegenüberliegender Abschnitte des Schalenrandes (6) bzw. Deckelrandes (11) vorgesehen sind.

5. Mehrweg-Verpackung nach einem der Ansprüche 1 bis 4, dadurch **gekennzeichnet, daß** die Klemmleisten (3) einstückig aus federelastischem Edelstahl geformt sind.

6. Mehrweg-Verpackung nach einem der Ansprüche 1 bis 5, dadurch **gekennzeichnet, daß** der Deckel (2) im wesentlichen eben ausgebildet ist.

7. Mehrweg-Verpackung nach Anspruch 6, dadurch **gekennzeichnet, daß** der Deckel (2) an seiner Außenseite eine parallel und im Abstand zum Deckelrand (11) umlaufende Anschlagleiste (15) für die Klemmleisten (3) trägt.

8. Mehrweg-Verpackung nach Anspruch 6 oder 7, dadurch **gekennzeichnet, daß** der Deckel (2) an seiner Innenseite eine parallel und im Abstand zum Deckelrand (11) umlaufende Registrierleiste (16) aufweist, welche in die Menüschale (1) hineinragt und an deren Seitenwänden (5) innen anliegt.

9. Mehrweg-Verpackung nach einem der Ansprüche 1 bis 8, dadurch **gekennzeichnet, daß** der Deckel (2) einstückig aus einem thermoplastischen Kunststoff geformt ist.

10. Mehrweg-Verpackung nach einem der Ansprüche 1 bis 9, dadurch **gekennzeichnet, daß** die Dichtung (14) aus dauerelastischem Kunststoff besteht und auf die Unterseite (8) des Deckelrandes (11) aufvulkanisiert ist.

Fig. 1

Fig. 2b

Fig. 2a

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 263 243   (BECTON, DICKINSON & COMPANY)<br>* Seite 7, letzter Absatz - Seite 8, Absatz 1 * * Seite 10, letzter Absatz - Seite 11, Absatz 1; Figuren 1, 3, 4 *<br>— — — | 1,9 | B 65 D 77/20<br>B 65 D 1/36<br>B 65 D 81/34 |
| D,A | DE-U-8 706 625   (PIEPER)<br>* das ganze Dokument *<br>— — — | 1 | |
| A | FR-A-1 158 516   (FIRMA GÜNTHER WAGNER)<br>* Seite 3, Zeilen 23 - 32; Figur 1 *<br>— — — | 1,6 | |
| A | US-A-4 512 498   (LEIBINGER)<br>* Figuren 1, 3 *<br>— — — — — | 1 | |

| RECHERCHIERTE SACHGEBIETE (Int. Cl.5) |
|---|
| B 65 D<br>A 47 G |

Der vorliegende Recherchenbericht wurde für alle Patentansprüche erstellt

| Recherchenort | Abschlußdatum der Recherche | Prüfer |
|---|---|---|
| Berlin | 19 Juni 91 | SPETTEL J D M L |